# EUROPEAN PATENT SPECIFICATION

(11) **EP 3 116 943 B1**
(45) Date of publication and mention of the grant of the patent: **24.07.2019**
(21) Application number: 15708590.3
(22) Date of filing: 26.01.2015
(51) Int. Cl.: C08K 3/26, C08K 3/34, C08L 67/02, H01B 3/42, C08K 5/00, C08K 5/523

(54) **FLAME RETARDANT POLYALKYLENE TEREPHTHALATE COMPOSITION**
FLAMMHEMMENDE POLYALKYLEN-TEREPHTHALAT-ZUSAMMENSETZUNG
COMPOSITION IGNIFUGE À BASE DE POLY(TÉRÉPHTALATE D'ALKYLÈNE)

(30) Priority: 10.03.2014 US 201461950503 P
(43) Date of publication of application: 18.01.2017
(73) Proprietor: SABIC Global Technologies B.V., 4612 PX Bergen op Zoom (NL)
(72) Inventor: WEI, Zhenke, Shanghai 201319 (CN); SHI, Hongtao, Shanghai 201319 (CN); SHEN, Dake, Shanghai 201319 (CN); LIN, Yegang, Shanghai 200120 (CN)
(74) Representative: Balder IP Law, S.L.
(86) International application number: PCT/IB2015/050581
(87) International publication number: WO 2015/136389

(56) References cited:
- EP-A1- 0 028 701
- EP-A1- 0 386 916

## Description

### Background of the Invention

Polyalkylene terephthalates, particularly polybutylene terephthalate (PBT) and polyethylene terephthalate (PET), are thermoplastic polyester resins with good electrical properties that are widely used as insulators to cover electrical wires and other electronics components. One criteria expected for the use of thermoplastic resins in electronics is that they must self-extinguish after catching fire as indicated by a UL 94 test rating of V-0. The V-0 test rating includes the requirement that the material tested may not burn with flaming combustion for more than 10 seconds after application of a test flame. Flame-retardant polyester compositions used to prepare electric components, which comprise polybutylene terephthtalate, a brominated flame-retardant, an antimony synergist, an inorganic filler and a phosphoric ester, are for example known from EP 0 386 916 A1.

However, polyalkylene terephthalates such as PBT and PET are fairly combustible and, even with the addition of fire retardants (FR), may not meet the requirements for a UL 94 V-0 rating particularly for thin-walled applications such as thin-walled electrical connectors. By addition of an antimony compound such as Sb₂O₃ as a flame poison, typically antimony trioxide, in combination with an organo-halide flame retardant, preferably an organo-bromide, suitable self-extinguishing PBT blends have been developed. Sb₂O₃ by itself is not a fire retardant, and the organo-halide flame retardants, by themselves, are typically insufficient in PBT formulations to achieve a V-0 rating without jeopardizing the mechanical properties of the PBT formulation.

When antimony compounds and organo-halides are combined, they act synergistically to form a very effective flame retardant system for polyalkylene terephthalates. As a result of this synergy, with low amounts of antimony, equivalent or better fire retardancy can be achieved with substantially reduced amounts of the organo-halide agent. Thus, to achieve a V-0 rating, PBT formulations frequently require an organo-bromo FR agent, an antimony FR synergist and, to meet the UL 94 V-0 rating drip requirement, a fluoropolymer antidrip component.

Recently, there has been a call to eliminate or at least reduce the amount of organo-halide and antimony FR synergist that is used in PBT formulations due to health and environmental concerns. Ogano-halides, particularly organobromides are known to generate large quantities of smoke when used as flame retardants, so their use presents drawbacks in practice. Because of their acidity, brominated components and Sb₂O₃ cause compositions to age at a faster rate than compositions that don't contain brominated components and Sb₂O₃. In addition, Sb₂O₃ is costly and the use of Sb₂O₃ presents a significant health risk to consumers. Finally, using organo-bromo FR agents together with an antimony FR synergist can reduce the comparative tracking index (CTI) of polyesters such as PBT. CTI measures the electrical breakdown (tracking) of insulating materials. A reduction in CTI indicates lower insulating performance.

Consequently, in light of health, environmental, performance, and cost considerations, there is an ongoing need for flame retardant polyalkylene terephthalate compositions that maintain or surpass the performance attributes of currently available flame retardant polyester compositions for thin-walled electronics that contain a reduced amount of organo-bromo FR agent and antimony FR synergist.

### Summary of the Invention

These and other needs are met by the present invention which is directed to flame retardant polyalkylene terephthalate compositions that employ reduced amounts of organo-halide as flame retardants antimony FR synergists. Thus, in one aspect, the invention provides a polyalkylene terephthalate flame retardant composition that comprises:
(a) 20 to 70 parts by weight of a polyalkylene terephthalate or a mixture of polyalkylene terephthalates;
(b) 5 to 15 parts by weight of poly(pentabromobenzyl acrylate);
(c) 0.1 to 5 parts by weight of an antimony synergist; and
(d) 0.5 to 3 parts by weight of bisphenol A diphenyl phosphate;
(e) 0.5 to 5 parts by weight of a nucleating agent which is talc;
(f) 0.01 to 2 parts by weight of sodium or potassium carbonate;
(g) 0 to 60 parts by weight of a reinforcing agent; and
(h) 0 to 70 parts by weight of a polycarbonate;
wherein the flame retardant composition has a UL-94 rating of V-0 at 0.4 millimeter thickness.

In addition to being characterized by the presence of a phosphorous containing flame retardant compound and sodium or potassium carbonate, the compositions of the present inventions contain reduced amounts of organo-bromo FR agent and/or antimony FR synergist and have excellent flame retardant properties.

In another aspect, the invention provides an article comprising the composition according to any of claims 1 to 16.

In yet another aspect, the invention provides an electrical connector comprising the composition according to claim 15.

### Detailed Description of the Invention

As used herein the singular forms "a," "an," and "the" include plural referents. The term "combination" is inclusive of blends, mixtures, alloys, reaction products, and the like. Compounds are described using standard nomenclature. The term "and a combination thereof' is inclusive of the named component and/or other components not specifically named that have essentially the same function. Unless defined otherwise, technical and scientific terms used herein have the same meaning as is commonly understood by one of skill.

Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount.

All ASTM tests and data are from the 2003 edition of the Annual Book of ASTM Standards unless otherwise indicated.

### Polyalkylene Terephthalate

The composition comprises a polyalkylene terephthalate or a mixture of polyalkylene terephthalates. Polyalkylene terephthalates in the context of the invention are polyalkylene terephthalates which are derived from terephthalic acid (or its reactive derivatives) and alkanediols, for example based on ethylene glycol, propylene glycol or butanediol or copolymerized polyesters having polyalkylene terephthalate as a principal component included in a polyester. Examples of the polyalkylene terephthalates, of the present invention include, but are not limited to, poly(ethylene terephthalate) ("PET"), poly(ethylene terephthalate-co-ethylene adipate ("PETA"), poly(butylene terephthalate) ("PBT"), poly(propylene terephthalate) ("PPT"), poly(cyclohexylenedimethylene terephthalate) ("PCT"), poly(trimethylene terephthalate) ("PTT"), poly(1,4-cyclohexylene dimethylene terephthalate-co-isophthalate) ("PCTA"), glycol modified polycyclohexylenedimethylene terephthalate ("PCTG"), glycol-modified polyethylene terephthalate ("PETG"), or combinations of one or more of each type of the polyalkylene terephthalates. As defined herein, polybutylene terephthalate or PBT includes PBT made from terephthalic acid, from dimethyl terephthalate, from recycled PET and from any other material that may be used to produce PBT.

In one embodiment, the polyalkylene terephthalate is PET, PBT, a combination of PBTs, a combination of PETs, or a combination of PBT and PET. Even more particularly, the polyalkylene terephthalate is PBT or a combination of PBTs. For example, the composition of the present invention can comprise a mixture of a first polybutylene terephthalate, having an intrinsic viscosity of greater than about 0.8 to about 1.4 cm³/g and a second polybutylene terephthalate having an intrinsic viscosity of about 0.4 to about 0.8 cm³/g.

In these and other embodiments, about 20 to about 70 parts by weight of PBT or a combination of PBTs is used. More particularly, about 25 to about 60 parts by weight of PBT or a combination of PBTs is used. More particularly, about 45 to about 60 parts by weight of PBT or a combination of PBTs is used. Alternatively, about 50 to about 60 parts by weight of PBT or a combination of PBTs is used.

In a particular embodiment, the polyalkylene terephthalate is a PBT having an intrinsic viscosity of 0.4 to 1.4cm³/g. As used herein, intrinsic viscosity is measured in a 60:40 mixture of phenol/tetrachloroethane mixture at 25°C according to ASTM D 2857-70 using a viscosimeter according to DIN 51562. Thus, more particularly, the PBT is a PBT with an intrinsic viscosity of 0.66 cm³/g as measured in a 60:40 phenol/tetrachloroethane.

In another particular embodiment, the polyalkylene terephthalate is a combination of PBTs is used. The combination of PBTs comprises 40 to 50 parts by weight of a PBT having an intrinsic viscosity of 0.4 to 0.8cm³/g and 1 to 10 parts by weight of a PBT having an intrinsic viscosity of 0.8 to 1.4 cm³/g.

### Flame Retardant

In addition to the polyalkylene terephthalate, the composition contains a flame retardant in combination with an antimony FR synergist and as well as a phosphorous containing flame retardant.

### Organo-Bromo FR Agent

In addition to the polyester, the composition contains an organo-bromo flame retardant (FR) agent comprising poly(pentabromobenzyl acrylate). Organo-bromo FR agents useful in the practice of this invention include tetrabromobisphenol A polycarbonate oligomer, polybromophenyl ether, brominated polystyrene (Br-PS), brominated bisphenol A polyepoxide, brominated imides, brominated polycarbonate, poly (bromoaryl acrylate), poly (bromoaryl methacrylate), or mixtures thereof.

Other suitable FRs are brominated polystyrenes such as polydibromostyrene and polytribromostyrene, decabromobiphenyl ethane, tetrabromobiphenyl, brominated alpha, omega-alkylene-bis-phthalimides, e.g., N,N'-ethylene-bis-tetrabromophthalimide, oligomeric brominated carbonates, especially carbonates derived from tetrabromobisphenol A, which, if desired, are end-capped with phenoxy radicals, or with brominated phenoxy radicals, or brominated epoxy resins.

In other embodiments, the organo-bromo FR agent is selected from the group consisting of decabromodiphenyl ether (Deca-BDE), decabromodiphenyl ethane (DBDPE), poly(pentabromobenzylacrylate (Br-acrylate), tetrabromobisphenol A (TBBPA), TBBPA oligomer, hexabromocyclododecane (HBCD), polybromophenyl ether, tetrabromo bisphenol A-tetrabromobisphenol A diglycidyl ether (brominated epoxide), brominated polystyrene (Br-PS), brominated imide, brominated polycarbonate (Br-PC), 2,4,6-tribromophenyl terminated TBBPA, TBBPA carbonate oligomer, or combinations thereof.

More particularly, the organo-bromo FR agent is selected from the group consisting of phenoxy-terminated tetrabrombisphenol A carbonate oligomer (TBBPA) which is available as BC-52, CAS Reg. No. 71342-77-3 for instance, from ICL-IP; 2,4,6-tribromophenyl-terminated tetrabrombisphenol A carbonate oligomer, which is available as BC-58, CAS Reg. No. 71342773, from, for instance, ICL-IP; decabromodiphenylethane (DBDPE), CAS Reg. No. 84852-53-9, from, for instance, Albemarle Corporation; poly(pentabromobenzylacrylate) (Br-Acrylate) CAS Reg. No. 59447-57-3, from, for instance, ICL-IP; tetrabromo bisphenol A-tetrabromobisphenlo A diglycidyl ether (Br-Epoxy), CAS Reg. No. 68928-70-1, from, for instance, Sakamoto Yakuhin Kogyo; brominated polystyrene (Br-PS), CAS Reg. No. 88497-56-7, from, for instance, Albemarle Corporation; brominated polycarbonate (Br-PC) which is a copolymer comprising units of bisphenol A (CAS Reg. No. 111211-39-3); and tetrabromobisphenol A, 24-29 percent bromine by weight (CAS Reg. No. 156042-31-8). More particularly, the brominated FR compound is selected from the group consisting of brominated polystyrene (Br-PS) and poly(pentabromobenzylacrylate (Br-Acrylate).

In one embodiment, about 5 to about 15 parts by weight of the organo-bromo FR agent is used. More particularly, about 6 to about 14 parts by weight of the organo-bromo FR agent is used. More particularly, about 7 to about 15 parts by weight of the organo-bromo FR agent is used. More particularly, about 9 to about 13 parts by weight of the organo-bromo FR agent is used.

### Antimony Synergist

In addition to the polyester and organo-bromo FR agent, the composition contains an antimony synergist. As indicated above, antimony compounds are not themselves flame retardants, but they act as a flame poisons. When used in combination with organo-halide flame retardants, antimony compounds form an effective flame retardant package. As used herein, "antimony synergist" means a flame retardant compound such as antimony trioxide (Sb₂O₃), antimony pentoxide (Sb₂O₅), or antimony-metal compounds, such as sodium antimonate (Na₂SbO₄). In one embodiment, the antimony flame retardant compound is Sb₂O₃.

In one embodiment, the composition comprises about 0.1 to about 5 parts by weight of Sb₂O₃. In another embodiment, the composition comprises about 1 to about 3 parts by weight of Sb₂O₃.

### Phosphorous Containing FR

The composition of the invention also contains a phosphorous containing FR which is an organophosphate ester. Exemplary organophosphate ester FRs include, but are not limited to, phosphate esters comprising phenyl groups, substituted phenyl groups, or a combination of phenyl groups and substituted phenyl groups, bis-aryl phosphate esters based upon resorcinol such as, for example, resorcinol bis-diphenylphosphate, as well as those based upon bis-phenols such as, for example, bis-phenol A bis-diphenylphosphate (BPADP). In one embodiment, the organophosphate ester is selected from tris(alkylphenyl) phosphate (for example, CAS Reg. No. 89492-23-9 or CAS Reg. No. 78-33-1), resorcinol bis-diphenylphosphate (for example, CAS Reg. No. 57583-54-7), bis-phenol A bis-diphenylphosphate (for example, CAS Reg. No. 181028-79-5), triphenyl phosphate (for example, CAS Reg. No. 115-86-6), tris(isopropylphenyl) phosphate (for example, CAS Reg. No. 68937-41-7), triphenyl phosphate (CAS Reg. No. 115-86-6), phosphoric acid,P,P'-1,3-phenylene and P,P,P',P'-tetrakis(2,6-dimethylphenyl) ester" (CAS Reg. No. 139189-30-3) and mixtures of two or more of the foregoing organophosphate esters. In a particular embodiment, the composition comprises BPADP.

In one embodiment, the composition comprises 0.5 to 3 percent by weight of BPADP. More particularly, the composition comprises 0.5 to 2.5 percent by weight of BPADP. More particularly, the composition comprises 0.75 to 2.25 parts by weight of BPADP.

### Antidrip Agent

In addition to the polyalkylene terephthalate, organo-bromo FR agent, antimony synergist, and phosphorous containing FR, the composition optionally contains an antidrip agent, such as, for example a fibril forming or non-fibril forming fluoropolymer such as polytetrafluoroethylene (PTFE). The anti-drip agent may be encapsulated by a rigid copolymer as described above, for example styrene acrylonitrile resin (SAN). PTFE encapsulated in SAN is known as TSAN. Encapsulated fluoropolymers may be made by polymerizing the encapsulating polymer in the presence of the fluoropolymer, for example an aqueous dispersion.

The antidrip agent is generally used in the compositions of the invention in amounts of about 0.1 to about 5 parts by weight, and more preferably about 0.25 to 2 parts by weight.

### Filler

The composition comprises a carbonate salt as a particulate filler. "Carbonate salt" means potassium carbonate, sodium carbonate, or the like. In a more particular embodiment, the composition comprises 0.01 to 2 parts by weight and more particularly about 0.05 to 0.15 parts by weight of sodium carbonate. In a more particular embodiment, the composition comprises about 0.08 to about 0.125 parts by weight of sodium carbonate.

The composition also contains a filler such as alumina, amorphous silica, anhydrous aluminum silicates, mica, feldspar, clays, talc, glass flake, glass microspheres, wollastonite, metal oxides such as titanium dioxide, zinc oxide, ground quartz, and the like. The preferred additional filler is talc. The talc may be coated, surface treated, or untreated. A variety of talcs are commercially available, for instance, from Mineral Technologies, Inc. or other vendors such as Luzenac, Inc. In one embodiment, the talc is an uncoated talc having a mean particle size of less than 0.9 micrometer.

In one embodiment, the composition comprises about 0.5 to 5 parts by weight of an uncoated talc having a mean particle size of less than 0.9 micrometer. In another embodiment, the composition comprises about 1.7 to 2.3 parts by weight of talc. In a more particular embodiment, the composition comprises about 1.75 to about 2.25 parts by weight of talc.

The composition may also optionally further comprise a reinforcing filler as are commonly known in the art, such as glass, clay, silica, silicates, alumina, borates and oxides.

In one embodiment, the reinforcing filler is a rigid fiber such as glass, carbon, metal and ceramic fibers, or a combination thereof. In a particular embodiment, the reinforcing filler is a glass fibers. Glass fibers typically have a modulus of greater than or equal to about 6,800 megaPascals, and can be chopped or continuous. The glass fiber can have various cross-sections, for example, round, trapezoidal, rectangular, square, crescent, bilobal, trilobal, and hexagonal. Glass fibers can be in the form of chopped strands having an average length of from 0.1 mm to 10 mm, and having an average aspect ratio of 2 to 5. In articles molded from the compositions, shorter lengths will typically be encountered because during compounding considerable fragmentation can occur.

For some uses, it can be desirable to treat the surface of the fiber, in particular a glass fiber, with a chemical coupling agent to improve adhesion to a thermoplastic resin in the composition. Examples of useful coupling agents are alkoxy silanes and alkoxy zirconates. Amino, epoxy, amide, or thio-functional alkoxy silanes are especially useful. Fiber coatings with high thermal stability are preferred to prevent decomposition of the coating, which could result in foaming or gas generation during processing at the high melt temperatures required to form the compositions into molded parts.

For compositions ultimately employed for electrical uses, it is preferred to use fibrous glass fibers comprising lime-aluminum borosilicate glass that is relatively soda free, commonly known as "E-glass". The glass fibers may be made by standard processes, such as by steam or air blowing, flame blowing and mechanical pulling. Preferred glass fibers for plastic reinforcement may be made by mechanical pulling. The diameter of the glass fibers is generally about 1 to about 50 micrometers, preferably about 5 to about 20 micrometers. Smaller diameter fibers are generally more expensive, and glass fibers having diameters of about 10 to about 20 micrometers presently offer a desirable balance of cost and performance. In preparing the molding compositions, it is convenient to use the filamentous glass in the form of chopped strands of about one-eighth to about 2 inches long, which usually results in filament lengths between about 0.0005 to about 0.25 inch in the molded compounds. Such glass fibers are normally supplied by the manufacturers with a surface treatment compatible with the polymer component of the composition, such as a siloxane, titanate, or polyurethane sizing, or the like.

When used in the composition, the glass fiber is normally included at a level of from about 1 to 60 parts by weight, preferably 1 to 50 parts by weight, more preferably from about 15 to 45 parts by weight, and more preferably 25 to about 35 parts by weight.

### Polycarbonate

The composition may also optionally comprise a polycarbonate or mixture of polycarbonates in addition to the other components. The terms "polycarbonate" and "polycarbonate polymer" are widely understood by those skilled in the art to mean compositions having repeating structural carbonate units of the formula: 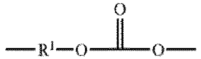 in which at least about 60 percent of the total number of R¹ groups are aromatic organic radicals and the balance thereof are aliphatic, alicyclic, or aromatic radicals. In one embodiment, each R¹ is an aromatic organic radical, for example a radical of the formula: -A¹-Y¹-A²- wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O₂)-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene.

Polycarbonates may be produced by the interfacial reaction of dihydroxy compounds having the formula HO-R¹-OH, wherein R¹ is as defined above. Dihydroxy compounds suitable in an interfacial reaction include the dihydroxy compounds of formula (A) as well as dihydroxy compounds of the formula HO-A¹-Y¹-A²-OH wherein Y¹, A¹ and A² are as described above. Also included are bisphenol compounds of the general formula: 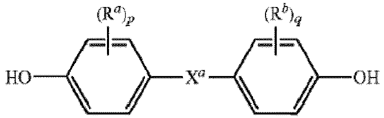 wherein R^{a} and R^{b} each represent a halogen atom or a monovalent hydrocarbon group and may be the same or different; p and q are each independently integers of 0 to 4; and X^{a} represents one of the groups of the formula: 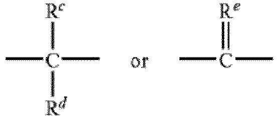 wherein R^{c} and R^{d} each independently represent a hydrogen atom or a monovalent linear or cyclic hydrocarbon group and R^{e} is a divalent hydrocarbon group.

Some illustrative, non-limiting examples of suitable dihydroxy compounds include the following: resorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl) -1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha,alpha'-bis(4-hydroxyphenyl)toluene, bis(4-hydroxyphenyl)acetonitrile, 2,2-bis(3-methyl -4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2-phenyl-3,,3-bis(4-hydroxyphenyl)phthalimidine (PPPBP), 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy compounds.

Specific examples of the types of bisphenol compounds that may be represented by formula (3) include 1,1-bis(4-hydroxyphenyl)methane, 1,1-bis(4-hydroxyphenyl)ethane, 2,2-bis(4-hydroxyphenyl) propane (hereinafter "bisphenol-A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, and 1,1-bis(4-hydroxy-t-butylphenyl) propane. Combinations comprising at least one of the foregoing dihydroxy compounds may also be used.

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha,alpha-dimethyl benzyl)phenol), trimesic acid, and benzophenone tetracarboxylic acid. The branching agents may be added at a level of about 0.05 weight percent (weight percent) to about 2.0 weight percent. All types of polycarbonate end groups are contemplated as being useful in the polycarbonate composition, provided that such end groups do not significantly affect desired properties of the thermoplastic compositions.

Suitable polycarbonates can be manufactured by processes such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., about 8 to about 10. The most commonly used water immiscible solvents include methylene chloride, 1,2-dichloroethane, chlorobenzene, toluene, and the like. Suitable carbonate precursors include, for example, a carbonyl halide such as carbonyl bromide or carbonyl chloride, or a haloformate such as a bishaloformate of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used.

Rather than utilizing the dicarboxylic acid per se, it is possible, and sometimes even desired, to employ the reactive derivatives of the acid, such as the corresponding acid halides, in particular the acid dichlorides and the acid dibromides. Thus, for example, instead of using isophthalic acid, terephthalic acid, or mixtures thereof, it is possible to employ isophthaloyl dichloride, terephthaloyl dichloride, and mixtures thereof.

Among the phase transfer catalysts that may be used are catalysts of the formula (R³)⁴Q⁺X, wherein each R³ is the same or different, and is a C₁₋₁₀ alkyl group; Q is a nitrogen or phosphorus atom; and X is a halogen atom or a C₁₋₈ alkoxy group or a C₆₋₁₈ aryloxy group. Suitable phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst may be about 0.1 to about 10 weight percent based on the weight of bisphenol in the phosgenation mixture. In another embodiment an effective amount of phase transfer catalyst may be about 0.5 to about 2 weight percent based on the weight of bisphenol in the phosgenation mixture.

Alternatively, melt processes may be used to make the polycarbonates. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury® mixer, twin screw extruder, or the like to form a uniform dispersion. Volatile monohydric phenol is removed from the molten reactants by distillation and the polymer is isolated as a molten residue.

"Polycarbonates" and "polycarbonate polymers" as used herein further includes blends of polycarbonates with other copolymers comprising carbonate chain units. An exemplary copolymer is a polyester carbonate, also known as a copolyester-polycarbonate. Such copolymers further contain, in addition to recurring carbonate chain units of the formula: 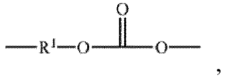 repeating units of the formula: 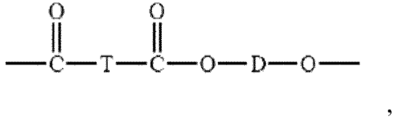 wherein D is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to about 6 carbon atoms, specifically 2, 3, or 4 carbon atoms; and T is a divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical.

In one embodiment, D is a C₂₋₆ alkylene radical. In another embodiment, D is derived from an aromatic dihydroxy compound of the formula: 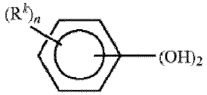 wherein each R^{k} is independently a halogen atom, a C₁₋₁₀ hydrocarbon group, or a C₁₋₁₀ halogen substituted hydrocarbon group, and n is 0 to 4. The halogen is usually bromine. Examples of compounds that may be represented by this formula include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of terephthalic acid to isophthalic acid is about 10:1 to about 0.2:9.8. In another specific embodiment, D is a C₂₋₆ alkylene radical and T is p-phenylene, m-phenylene, naphthalene, a divalent cycloaliphatic radical, or a mixture thereof. This class of polyester includes the poly(alkylene terephthalates).

In other embodiments, poly(alkylene terephthalates) may be used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), (polypropylene terephthalate) (PPT), polycyclohexanedimethanol terephthalate (PCT), and combinations comprising at least one of the foregoing polyesters. Also contemplated are the above polyesters with a minor amount, e.g., from about 0.5 to about 10 percent by weight, of units derived from an aliphatic diacid and/or an aliphatic polyol to make copolyesters.

Copolymers comprising alkylene terephthalate repeating ester units with other ester groups may also be useful. Useful ester units may include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol % of poly(ethylene terephthalate), and abbreviated as PCTG where the polymer comprises greater than 50 mol % of poly(1,4-cyclohexanedimethylene terephthalate).

Poly(cycloalkylene diester)s may also include poly(alkylene cyclohexanedicarboxylate)s. Of these, a specific example is poly(1,4-cyclohexane -dimethanol-1,4-cyclohexanedicarboxylate) (PCCD), having recurring units of formula: 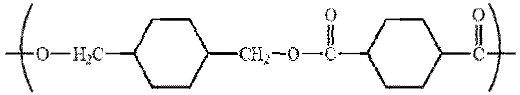 wherein, as described using formula (6), D is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

Another exemplary polycarbonate copolymer comprises polycarbonate blocks as described above and polydiorganosiloxane blocks. The polydiorganosiloxane blocks comprise repeating structural units of the formula (sometimes referred to herein as "siloxane"): 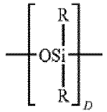 wherein each occurrence of R is same or different, and is a C₁₋₁₃ monovalent organic radical. For example, R may be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₀ aryl group, C₆₋₁₀ aryloxy group, C₇₋₁₃ aralkyl group, C₇₋₁₃ aralkoxy group, C₇₋₁₃ alkaryl group, or C₇₋₁₃ alkaryloxy group. Combinations of the foregoing R groups may be used in the same copolymer.

The value of D in 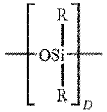 may vary widely depending on the type and relative amount of each component in the thermoplastic composition, the desired properties of the composition, and like considerations. Generally, D may have an average value of 2 to about 1000, specifically about 2 to about 500, more specifically about 5 to about 100. In one embodiment, D has an average value of about 10 to about 75, and in still another embodiment, D has an average value of about 40 to about 60. Where D is of a lower value, e.g., less than about 40, it may be desirable to use a relatively larger amount of the polycarbonate-polysiloxane copolymer. Conversely, where D is of a higher value, e.g., greater than about 40, it may be necessary to use a relatively lower amount of the polycarbonate-polysiloxane copolymer.

A combination of a first and a second (or more) polycarbonate-polysiloxane copolymers may be used, wherein the average value of D of the first copolymer is less than the average value of D of the second copolymer.

In one embodiment, the polydiorganosiloxane blocks are provided by repeating structural units of the formula: 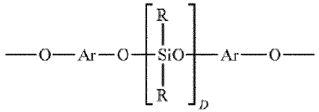 wherein D is as defined above; each R may be the same or different, and is as defined above; and Ar may be the same or different, and is a substituted or unsubstituted C₆₋₃₀ arylene radical, wherein the bonds are directly connected to an aromatic moiety. Suitable Ar groups in this formula may be derived from a C₆₋₃₀ dihydroxyarylene compound, for example a dihydroxyarylene compound of formula HO-A¹-Y¹-A²-OH, 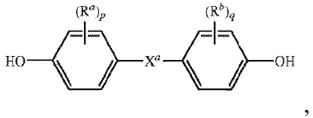 or 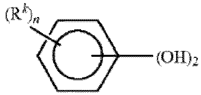 above. Combinations comprising at least one of the foregoing dihydroxyarylene compounds may also be used. Specific examples of suitable dihydroxyarlyene compounds are 1,1-bis(4-hydroxyphenyl)methane, 1,1-bis(4-hydroxyphenyl)ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl)cyclohexane, bis(4-hydroxyphenyl sulphide), and 1,1-bis(4-hydroxy-t-butylphenyl) propane. Combinations comprising at least one of the foregoing dihydroxy compounds may also be used.

Such units may be derived from the corresponding dihydroxy compound of the following formula: 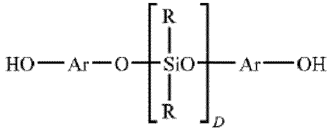 wherein Ar and D are as described above. Such compounds are further described in U.S. Pat. No. 4,746,701 to Kress et al. Compounds of this formula may be obtained by the reaction of a dihydroxyarylene compound with, for example, an alpha,omega-bisacetoxypolydiorangonosiloxane under phase transfer conditions.

In another embodiment the polydiorganosiloxane blocks comprise repeating structural units of the formula: 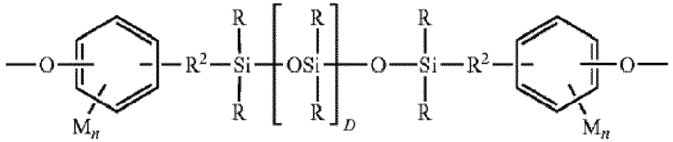 wherein R and D are as defined above. R² in this formula is a divalent C₂₋₈ aliphatic group. Each M in this formula may be the same or different, and may be a halogen, cyano, nitro, C₁₋₈ alkylthio, C₁₋₈ alkyl, C₁₋₈ alkoxy, C₂₋₈ alkenyl, C₂₋₈ alkenyloxy group, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkaryl, or C₇₋₁₂ alkaryloxy, wherein each n is independently 0, 1, 2, 3, or 4.

In one embodiment, M is an alkyl group such as methyl, ethyl, or propyl, an alkoxy group such as methoxy, ethoxy, or propoxy, or an aryl group such as phenyl or tolyl; R² is a dimethylene, trimethylene or tetramethylene group; and R is a C₁₋₈ alkyl, cyanoalkyl, or aryl such as phenyl, or tolyl. In another embodiment, R is methyl or a mixture of methyl and phenyl. In still another embodiment, M is methoxy, n is one, R² is a divalent C₁₋₃ aliphatic group, and R is methyl.

These units may be derived from the corresponding dihydroxy polydiorganosiloxane: 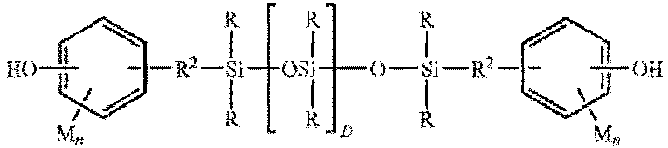 wherein R, D, M, R², and n are as described above.

Such dihydroxy polysiloxanes can be made by effecting a platinum catalyzed addition between a siloxane hydride of the formula: 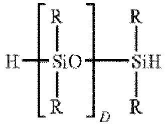 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing may also be used.

A polycarbonate-polysiloxane copolymer may be manufactured by reaction of diphenolic polysiloxane with a carbonate source and a dihydroxy aromatic compound, optionally in the presence of a phase transfer catalyst as described above. Suitable conditions are similar to those useful in forming polycarbonates. For example, the copolymers are prepared by phosgenation, at temperatures from below 0 °C to about 100 °C, desirably about 25 °C to about 50 °C. Since the reaction is exothermic, the rate of phosgene addition may be used to control the reaction temperature. The amount of phosgene required will generally depend upon the amount of the dihydric reactants. Alternatively, the polycarbonate-polysiloxane copolymers may be prepared by co-reacting in a molten state, the dihydroxy monomers and a diaryl carbonate ester, such as diphenyl carbonate, in the presence of a transesterification catalyst as described above. Siloxane groups may also be present at or attached to the ends of the copolymer as well.

In the production of a polycarbonate-polysiloxane copolymer, the amount of dihydroxy polydiorganosiloxane is selected so as to provide the desired amount of polydiorganosiloxane units in the copolymer. The amount of polydiorganosiloxane units may vary widely, i.e., may be about 1 weight percent to about 99 weight percent of polydimethylsiloxane, or an equivalent molar amount of another polydiorganosiloxane, with the balance being carbonate units. The particular amounts used will therefore be determined depending on desired physical properties of the thermoplastic composition, the value of D (within the range of 2 to about 1000), and the type and relative amount of each component in the thermoplastic composition, including the type and amount of polycarbonate, type and amount of impact modifier, type and amount of polycarbonate-polysiloxane copolymer, and type and amount of any other additives. Suitable amounts of dihydroxy polydiorganosiloxane can be determined by one of ordinary skill in the art without undue experimentation using the guidelines taught herein. For example, the amount of dihydroxy polydiorganosiloxane may be selected so as to produce a copolymer comprising about 1 weight percent to about 75 weight percent, or about 1 weight percent to about 50 weight percent polydimethylsiloxane, or an equivalent molar amount of another polydiorganosiloxane. In one embodiment, the copolymer comprises about 5 weight percent to about 40 weight percent, optionally about 5 weight percent to about 25 weight percent polydimethylsiloxane, or an equivalent molar amount of another polydiorganosiloxane, with the balance being polycarbonate. In a particular embodiment, the copolymer may comprise about 20 weight percent siloxane.

In specific embodiments, the polycarbonate polymer is derived from a dihydroxy compound having the structure of the Formula: 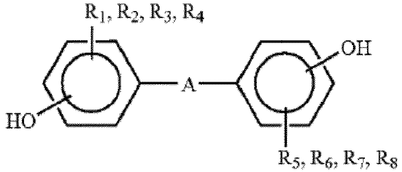 wherein R₁ through R₈ are each independently selected from hydrogen, halogen, nitro, cyano, C₁₋₂₀ alkyl, C₄₋₂₀ cycloalkyl, and C₆₋₂₀ aryl; and A is selected from a bond, -O-, -S-, -SO₂, C₁₋₁₂ alkyl, C₆₋₂₀ aromatic, and C₆₋₂₀ cycloaliphatic.

In specific embodiments, the dihydroxy compound of Formula (I) is 2,2-bis(4-hydroxyphenyl) propane (i.e. bisphenol-A or BPA). Other illustrative compounds of Formula (I) include: 2,2-bis(4-hydroxy-3-methylphenyl)propane; 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3'-dioctyl-1,1-biphenyl; 4,4'-dihydroxydiphenylether; 4,4'-dihydroxydiphenylthioether; and 1,3-bis(2-(4-hydroxyphenyl)-2-propyl)benzene.

The polyorganosiloxane-polycarbonate can comprise 50 to 99 weight. % of carbonate units and 1 to 50 weight.% siloxane units. Within this range, the polyorganosiloxane-polycarbonate copolymer can comprise 70 to 98 weight.%, more specifically 75 to 97 weight.% of carbonate units and 2 to 30 weight.%, more specifically 3 to 25 weight.% siloxane units.

Polyorganosiloxane-polycarbonates can have a weight average molecular weight of 2,000 to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonate can have a melt volume flow rate, measured at 300°C/1.2 kg, of 1 to 50 cubic centimeters per 10 minutes (cc/10 min), specifically 2 to 30 cc/10 min. Mixtures of polyorganosiloxane-polycarbonates of different flow properties can be used to achieve the overall desired flow property.

In one embodiment, Polycarbonate B is Polycarbonate-Polydimethylsiloxane copolymer containing approximately 18 to 20 percent siloxane. The polycarbonate-polysiloxane copolymer has a weight average molecular weight of 28,000 to 32,000.

Specifically, the polycarbonate-siloxane block copolymer can have the following formula: 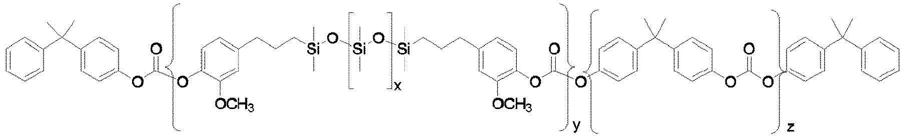 wherein x is 30-50, specifically about 40, y is 10-30, specifically about 20, and z is 45-60, specifically about 50 or 55.
In one embodiment, the composition comprises about 00 to about 70 parts by weight of polycarbonate. In one embodiment, the composition comprises 40 to 60 parts by weight of a polycarbonate.

### Other Ingredients

The composition of the present invention may optionally include other additives which do not interfere with the previously mentioned desirable properties but enhance other favorable properties. Optional components and additives that may be compounded or blended into the composition of the invention in customary amounts include inert inorganic pigments, dyestuffs, lubricants, release agents, UV absorbers, UV stabilizers, anti-oxidants, anti-ozonants, stabilizers, stain-proofing agents, anti-static additives, anti-microbial agents, melt viscosity enhancers, impact modifiers, quenchers, processing aids, and the like. The different additives that can be incorporated in the compositions are commonly used and known to one skilled in the art. Illustrative descriptions of such additives may be found in R. Gachter and H. Muller, Plastics Additives Handbook, 6th edition, 2009.

### Article

In another aspect, the invention is directed to an article such as a thin-walled electrical connector that comprises a polyalkylene terephthalate flame retardant composition as described herein. More particularly, the article comprises
(a) about 20 to about 70 parts by weight of a polyalkylene terephthalate or a mixture of polyalkylene terephthalates;
(b) about 5 to about 15 parts by weight of a organo-bromo flame retardant (FR) agent;
(c) about 0.1 to about 5 parts by weight of an antimony synergist; and
(d) about 0.5 to about 3 parts by weight of bisphenol A diphenyl phosphate (BPADP);
(e) 0.5 to 5 parts by weight of a nucleating agent which is talc;
(f) 0.01 to 2 parts by weight of sodium or potassium carbonate;
(g) 0 to 70 parts by weight of a polycarbonate;
wherein the flame retardant composition has a UL-94 rating of V-0.

In a particular embodiment, the invention is directed to a thin-walled electrical connector that comprises a polyalkylene terephthalate flame retardant composition comprising
(a) about 45 to about 60 parts by weight of a polyalkylene terephthalate or a mixture of polyalkylene terephthalates;
(b) about 7 to about 15 parts by weight of a organo-bromo flame retardant (FR) agent;
(c) about 1 to about 3 parts by weight of an antimony synergist; and
(d) about 0.75 to about 1.5 parts by weight of bisphenol A diphenyl phosphate;
(e) 0.5 to 5 parts by weight of talc;
(f) 0.05 to 0.15 parts by weight of sodium or potassium carbonate; and
(g) 15 to 45 parts by weight of glass fiber;
wherein the flame retardant composition has a UL-94 rating of V-0.

### Embodiments

**Embodiment 1.** A polyalkylene terephthalate flame retardant composition that comprises:
(a) 20 to 70 parts by weight of a polyalkylene terephthalate or a mixture of polyalkylene terephthalates;
(b) 5 to 15 parts by weight of poly(pentabromobenzyl acrylate);
(c) 0.1 to 5 parts by weight of an antimony synergist; and
(d) 0.5 to 3 parts by weight of bisphenol A diphenyl phosphate;
(e) 0.5 to 5 parts by weight of a nucleating agent which is talc;
(f) 0.01 to 2 parts by weight of sodium or potassium carbonate;
(g) 0 to 60 parts by weight of a reinforcing agent; and
(h) 0 to 70 parts by weight of a polycarbonate;
wherein the flame retardant composition has a UL-94 rating of V-0 at 0.4 millimeter thickness.

**Embodiment 2.** The polyalkylene terephthalate flame retardant composition of embodiment 1 wherein the polyalkylene terephthalate is selected from the group consisting of polyethylene terephthalate, polybutylene terephthalate a combination of polybutylene terephthalates and a combination of polyethylene terephthalate and polybutylene terephthalate.

**Embodiment 3.** The polyalkylene terephthalate flame retardant composition of embodiment 2 wherein the polyalkylene terephthalate is a polybutylene terephthalate or a combination of polybutylene terephthalates.

**Embodiment 4.** The polyalkylene terephthalate flame retardant composition of embodiment 3, wherein the polyalkylene terephthalate comprises a polybutylene terephthalate having an intrinsic viscosity of 0.4 to 1.4 cm³/g measured in a 60:40 mixture of phenol/tetrachloroethane mixture at 25°C according to ASTM D 2857-70 using a viscosimeter according to DIN 51562.

**Embodiment 5.** The polyalkylene terephthalate flame retardant composition of embodiment 3, wherein the polyalkylene terephthalate comprises a mixture of a first polybutylene terephthalate having an intrinsic viscosity of 0.4 to 0.8 cm³/g and a second polybutylene terephthalate having an intrinsic viscosity of 0.8 to 1.4 cm³/g, wherein intrinsic viscosity is measured in a 60:40 mixture of phenol/tetrachloroethane mixture at 25°C according to ASTM D 2857-70 using a viscosimeter according to DIN 51562.

**Embodiment 6.** The polyalkylene terephthalate flame retardant composition of embodiment 5, further comprising an antidrip agent which comprises polytetrafluoroethylene.

**Embodiment 7.** The polyalkylene terephthalate flame retardant composition of embodiment 6, comprising 0.25 to 2 parts by weight of polytetrafluoroethylene encapsulated in styrene acrylonitrile resin.

**Embodiment 8.** The polyalkylene terephthalate flame retardant composition of embodiment 7, further comprising 1 to 60 parts by weight of a reinforcing agent.

**Embodiment 9.** The polyalkylene terephthalate flame retardant composition of embodiment 8, wherein the reinforcing agent comprises a 15 to 45 parts by weight of glass fiber.

**Embodiment 10.** The polyalkylene terephthalate flame retardant composition of embodiment 9, wherein the composition comprises 25 to 35 parts by weight of a glass fiber.

**Embodiment 11.** The polyalkylene terephthalate flame retardant composition of embodiment 10, further comprising 0.75 to 2.25 parts by weight of BPADP.

**Embodiment 12.** The polyalkylene terephthalate flame retardant composition of embodiment 11, further comprising 1.7 to 2.3 parts by weight of talc.

**Embodiment 13.** The polyalkylene terephthalate flame retardant composition of embodiment 12, further comprising from 0.05 to 0.15 parts by weight of a particulate filler which is sodium carbonate.

**Embodiment 14.** The polyalkylene terephthalate flame retardant composition of embodiment 1, that comprises:
(a) 45 to 60 parts by weight of a polyalkylene terephthalate or a mixture of polyalkylene terephthalates;
(b) 7 to 15 parts by weight of poly(pentabromobenzyl acrylate);
(c) 1 to 3 parts by weight of an antimony synergist; and
(d) 0.75 to 2.25 parts by weight of bisphenol A diphenyl phosphate;
(e) 0.5 to 5 parts by weight of talc;
(f) 0.05 to 0.15 parts by weight of sodium or potassium carbonate; and
(g) 15 to 45 parts by weight of glass fiber;
wherein the flame retardant composition has a UL-94 rating of V-0 at 0.4 millimeter thickness.

**Embodiment 15.** The polyalkylene terephthalate flame retardant composition of embodiment 14, that comprises:
(a) 45 to 60 parts by weight of a PBT;
(b) 7 to 15 parts by weight of poly(pentabromobenzyl acrylate);
(c) 1 to 3 parts by weight of Sb₂O₃;
(d) about 0.75 to about 2.25 parts by weight of bisphenol A diphenyl phosphate;
(e) 1.7 to 2.3 parts by weight of talc;
(f) 0.05 to 0.15 parts by weight of sodium or potassium carbonate; and
(g) 25 to 35 parts by weight of glass fiber.

**Embodiment 16.** The polyalkylene terephthalate flame retardant composition of embodiment 14, that comprises:
(a) 40 to 50 parts by weight of a PBT having an intrinsic viscosity of 0.4 to 0.8cm³/g and 1 to 10 parts by weight of a PBT having an intrinsic viscosity of 0.8 to 1.4 cm³/g, wherein intrinsic viscosity is measured in a 60:40 mixture of phenol/tetrachloroethane mixture at 25°C according to ASTM D 2857-70 using a viscosimeter according to DIN 51562;
(b) 7 to 15 parts by weight of poly(pentabromobenzyl acrylate); and
(c) about 1 to about 3 parts by weight of Sb₂O₃;
(d) about 0.75 to about 2.25 parts by weight of BPADP;
(e) 1.7 to 2.3 parts by weight of talc;
(f) 0.05 to 0.15 parts by weight of sodium or potassium carbonate; and
(g) 25 to 35 parts by weight of glass fiber.

**Embodiment 17.** An article comprising the composition of any of embodiments 1-16.

**Embodiment 18.** An electrical connector comprising the composition of embodiments 15.

The following examples illustrate the scope of the invention. The examples and preparations which follow are provided to enable those skilled in the art to more clearly understand and to practice the present invention. They should not be considered as limiting the scope of the invention, but merely as being illustrative and representative thereof.

### Examples

Various polybutylene terephthalate formulations were prepared containing a bromine-based flame retardant, antimony trioxide, and a phosphorous-containing flame retardant compound with the goal of devising a PBT formulation that would demonstrate mechanical properties and flame retardance equivalent to or better than that obtained when using antimony trioxide and a brominated flame retardant and no phosphorous-containing flame retardant compound. The examples of the compositions of the present invention, annotated hereinafter as E1-1 and E1-2 and their comparative examples, annotated hereinafter as "CE", , E2-1, E2-2, E2-3 and E2-4, employed the materials listed in Table 1. All percent by weights employed in the examples are based on the percent by weight of the entire composition except where stated otherwise.

**Table 1**

| **Component** | **Trade Name and Supplier** |
|---|---|
| Polyester I | Polybutylene Terephthalate (PBT), sold by Changchun as Changchun PBT 1200D having a molecular weight of 60k and an intrinsic viscosity of 0.75 cm³/g as measured in a 60:40 phenol/tetrachloroethane. |
| Polyester II | Polybutylene Terephthalate (PBT), sold by Changchun as Changchun PBT 1100X having a molecular weight of 100k and an intrinsic viscosity of 1.26 cm³/g as measured in a 60:40 phenol/tetrachloroethane. |
| Brominated Polystyrene | Br-PS containing 5 percent polybutylene terephthalate, sold by Albemarle Corporation as SAYTEX 621 and having approximately 64.6 percent bromine.. |
| Br-Acrylate | Poly(pentabromobenzylacrylate) (Br-Acrylate) CAS Reg. No. 59447-57-3, from ICL Industrial Products. |
| BPADP | Bisphenol A bis-diphenylphosphate, CAS Reg. No. 181028-79-5, commercially available from DAIHACHI Chemical Industry Co., Ltd. Under the tradename of CR741. |
| SAN encapsulated Polytetrafluoroethylene | PTFE, CAS Reg. No. 9002-84-0, obtained from SABIC Innovative Plastics. |
| Glass Fiber | CAS Reg. No. 65997-17-3, 10 µm, chopped, column shaped and silicone coated from Chongqing Polycomp International Corp. as ECS303A. |
| Antimony Oxide | Sb₂O₃ CAS Reg. No. 1309-94-4; containing 20 percent polybutylene terephthalate, obtained from Campine N.V. (Belgium) as Antiox PBT 262415. |
| Talc | Ultratalc ® 609 uncoated having a diameter of 1 µm, obtained from Barretts Minerals, Inc. |
| Sodium Carbonate | Na₂CO₃, CAS Reg. No. 497-19-8. |
| Pentaerythritol tetrastearate | CAS Reg. No. 115-83-3. |
| Hindered Phenol Stabilizer | Benzenepropanoic acid, 3,5-bis(1,1-dimethylethyl)-4-hydroxy-, 1,1'-[2,2-bis[[3-[3,5-bis(1,1-dimethylethyl)-4-hydroxyphenyl]-1-oxopropoxy]methyl]-1,3-propanediyl] ester, CAS Reg. No. 6683-19-8, IRGANOX 1010 from BASF. |

### Testing

The tests used to characterize the compositions of the present invention, and the comparative examples, are summarized below in Table 2.

**Table 2. Mechanical Tests.**

| | **Standards** | **Testing Conditions** |
|---|---|---|
| Melt Volume Rate (MVR) | ASTM D 1238 | 250 °C, 5Kg |
| Uniaxial Tensile test | ASTM D 638 | 5 mm/min |
| Notched Izod Impact (NII) | ASTM D 256 | 5 lbf, 23 °C, 3.2 mm |
| Vicat softening temperature (VIC) | ASTM D 1525 | 50 N, 120 °C /h |

Flammability testing was conducted according to UL 94 regulations. The total flame-out-time was calculated at a specified thickness (0.75 mm). Table 3 shows the criteria for V0, VI, and V2 under UL94 standards. For a sample that meets V-2, burning stops within 30 seconds on a vertical specimen; drips of flaming particles are allowed. For a sample that meets VI, burning stops within 30 seconds on a vertical specimen; drips of particles allowed as long as they are not inflamed. For samples that meet V-0, burning stops within 10 seconds on a vertical specimen; drips of particles allowed as long as they are not inflamed.

**Table 3. Material Flame Retardance Classifications Under the UL94 Protocol.**

| **Criteria conditions** | **V-0** | **V-1** | **V-2** |
|---|---|---|---|
| After flame time for each individual specimen t1 or t2 | ≤10s | ≤30s | ≤30s |
| Total after flame time for any condition set (t1 plus t2 for the 5 specimen) | ≤50s | ≤250s | ≤250s |
| After flame plus afterglow time for each individual specimen after the second flame application (t2+t3) | ≤30s | ≤60s | ≤60s |
| After flame or afterglow of any specimen up to the holding clamp | No | No | No |
| Cotton indicator ignited bv flaming particles or drops | No | No | Yes |

### Compounding and Molding

Typical compounding and molding procedures are described as follows.

All the ingredients except glass fiber were pre-blended, and then extruded using a twin extruder. A typical extruding condition is listed in Table 4.

**Table 4. Compounding Conditions.**

| **Parameters** | | |
|---|---|---|
| Die | mm | 4 |
| Zone 1 Temp | °C | 100 |
| Zone 2 Temp | °C | 200 |
| Zone 3 Temp | °C | 240 |
| Zone 4 Temp | °C | 240 |
| Zone 5 Temp | °C | 240 |
| Zone 6 Temp | °C | 240 |
| Zone 7 Temp | °C | 250 |
| Zone 8 Temp | °C | 250 |
| Zone 9 Temp | °C | 260 |
| Die Temp | °C | 265 |
| Screw speed | rpm | 200 |
| Throughput | kg/hr | 60 |

The extruded pellets were molded in different shapes for mechanical tests. Table 5 shows typical molding conditions.

**Table 5. Molding Conditions.**

| **Parameters** | | |
|---|---|---|
| Cnd: Pre-drying time | Hour | 4 |
| Cnd: Pre-drying temp | °C | 120 |
| Hopper temp | °C | 50 |
| Zone 1 temp | °C | 250 |
| Zone 2 temp | °C | 250 |
| Zone 3 temp | °C | 250 |
| Nozzle temp | °C | 250 |
| Mold temp | °C | 50 |
| Screw speed | rpm | 100 |
| Back pressure | kgf/cm² | 50 |
| Molding Machine | NONE | Faunc |
| Mold Type (insert) | NONE | ASTM |

### Results

Table 6 depicts the effect of adding a particulate filler, sodium carbonate, and BPADP to PBT compositions containing a Br-FR, antimony synergist, glass fiber, and talc. The examples, all containing BPADP and sodium carbonate and reduced amounts of Sb₂O₃ or flame retardant, showed improved UL 94 flame retardance of V-0 compared to CE1-1, which had a UL94 rating of V-2 at 0.4 mm using 4 parts by weight of Sb₂O₃.

**Table 6.**

| | CE1-1 | CE1-2 | E1-1 | E1-2 | CE2-1 | CE2-2 | E2-1 | E2-2 | E2-3 | E2-4 |
|---|---|---|---|---|---|---|---|---|---|---|
| Polyester I Changchun PBT 1200D | 54.54 | 53.54 | 51.44 | 52.94 | 45.94 | 48.54 | 43.94 | 44.44 | 44.94 | 46.94 |
| Polyester II Changchun PBT 1100X | -- | -- | -- | -- | 6 | 6 | 6 | 6 | 6 | 6 |
| Br-PS SAYTEX 621 | -- | -- | -- | -- | 12 | 10 | 12 | 12 | 12 | 10 |
| Br-acrylate | 10 | 10 | 8 | 8 | -- | -- | -- | -- | -- | -- |
| Glass fiber | 30 | 30 | 30 | 30 | 30 | 30 | 30 | 30 | 30 | 30 |
| Sb₂O₃ | 4 | 4 | 4 | 2.5 | 2.5 | 4 | 2.5 | 2.5 | 2.5 | 2.5 |
| Na₂CO₃ | -- | -- | 0.1 | 0.1 | 0.1 | -- | 0.1 | 0.1 | 0.1 | 0.1 |
| Talc | -- | -- | 2 | 2 | 2 | -- | 2 | 2 | 2 | 2 |
| BPADP | -- | 1 | 1 | 1 | -- | -- | 2 | 1.5 | 1 | 1 |
| SAN encapsulated PTFE | 1.2 | 1.2 | 1.2 | 1.2 | 1.2 | 1.2 | 1.2 | 1.2 | 1.2 | 1.2 |
| Pentaerythritol tetrastearate | 0.2 | 0.2 | 0.2 | 0.2 | 0.2 | 0.2 | 0.2 | 0.2 | 0.2 | 0.2 |
| Hindered Phenol Stabilizer | 0.06 | 0.06 | 0.06 | 0.06 | 0.06 | 0.06 | 0.06 | 0.06 | 0.06 | 0.06 |
| MVR-ASTM (cm³/10 min) | 31 | 33 | 30 | 35 | 25 | 28 | 32 | 31 | 30 | 33 |
| FR 0.4 mm (UL) | V2 | V0 | V0 | V0 | V2 | V2 | V0 | V0 | V0 | V0 |

The foregoing invention has been described in some detail by way of illustration and example for purposes of clarity and understanding. The invention has been described with reference to various specific embodiments and techniques. It should be understood that many variations and modifications may be made while remaining within the spirit and scope of the invention. It will be obvious to one of skill in the art that changes and modifications may be practiced within the scope of the appended claims. The above description is intended to be illustrative and not restrictive. The scope of the invention should, therefore, be determined not with reference to the above description, but should instead be determined with reference to the following appended claims.

## Claims

1. A polyalkylene terephthalate flame retardant composition that comprises:
(a) 20 to 70 parts by weight of a polyalkylene terephthalate or a mixture of polyalkylene terephthalates;
(b) 5 to 15 parts by weight of poly(pentabromobenzyl acrylate);
(c) 0.1 to 5 parts by weight of an antimony synergist; and
(d) 0.5 to 3 parts by weight of bisphenol A diphenyl phosphate;
(e) 0.5 to 5 parts by weight of a nucleating agent which is talc;
(f) 0.01 to 2 parts by weight of sodium or potassium carbonate;
(g) 0 to 60 parts by weight of a reinforcing agent; and
(h) 0 to 70 parts by weight of a polycarbonate;
wherein the flame retardant composition has a UL-94 rating of V-0 at 0.4 millimeter thickness.

2. The polyalkylene terephthalate flame retardant composition of claim 1 wherein the polyalkylene terephthalate is selected from the group consisting of polyethylene terephthalate, polybutylene terephthalate a combination of polybutylene terephthalates and a combination of polyethylene terephthalate and polybutylene terephthalate.

3. The polyalkylene terephthalate flame retardant composition of claim 2 wherein the polyalkylene terephthalate is a polybutylene terephthalate or a combination of polybutylene terephthalates.

4. The polyalkylene terephthalate flame retardant composition of claim 3, wherein the polyalkylene terephthalate comprises a polybutylene terephthalate having an intrinsic viscosity of 0.4 to 1.4 cm³/g measured in a 60:40 mixture of phenol/tetrachloroethane mixture at 25°C according to ASTM D 2857-70 using a viscosimeter according to DIN 51562.

5. The polyalkylene terephthalate flame retardant composition of claim 3, wherein the polyalkylene terephthalate comprises a mixture of a first polybutylene terephthalate having an intrinsic viscosity of 0.4 to 0.8 cm³/g and a second polybutylene terephthalate having an intrinsic viscosity of 0.8 to 1.4 cm³/g, wherein intrinsic viscosity is measured in a 60:40 mixture of phenol/tetrachloroethane mixture at 25°C according to ASTM D 2857-70 using a viscosimeter according to DIN 51562.

6. The polyalkylene terephthalate flame retardant composition of claim 5, further comprising an antidrip agent which comprises polytetrafluoroethylene.

7. The polyalkylene terephthalate flame retardant composition of claim 6, comprising 0.25 to 2 parts by weight of polytetrafluoroethylene encapsulated in styrene acrylonitrile resin.

8. The polyalkylene terephthalate flame retardant composition of claim 7, further comprising 1 to 60 parts by weight of a reinforcing agent.

9. The polyalkylene terephthalate flame retardant composition of claim 8, wherein the reinforcing agent comprises 15 to 45 parts by weight of glass fiber.

10. The polyalkylene terephthalate flame retardant composition of claim 9, wherein the composition comprises 25 to 35 parts by weight of a glass fiber.

11. The polyalkylene terephthalate flame retardant composition of claim 10, further comprising 0.75 to 2.25 parts by weight of BPADP.

12. The polyalkylene terephthalate flame retardant composition of claim 11, further comprising 1.7 to 2.3 parts by weight of talc.

13. The polyalkylene terephthalate flame retardant composition of claim 12, further comprising from 0.05 to 0.15 parts by weight of a particulate filler which is sodium carbonate.

14. The polyalkylene terephthalate flame retardant composition of claim 1, that comprises:
(a) 45 to 60 parts by weight of a polyalkylene terephthalate or a mixture of polyalkylene terephthalates;
(b) 7 to 15 parts by weight of poly(pentabromobenzyl acrylate);
(c) 1 to 3 parts by weight of an antimony synergist; and
(d) 0.75 to 2.25 parts by weight of bisphenol A diphenyl phosphate;
(e) 0.5 to 5 parts by weight of talc;
(f) 0.05 to 0.15 parts by weight of sodium or potassium carbonate; and
(g) 15 to 45 parts by weight of glass fiber;
wherein the flame retardant composition has a UL-94 rating of V-0 at 0.4 millimeter thickness.

15. The polyalkylene terephthalate flame retardant composition of claim 14, that comprises:
(a) 45 to 60 parts by weight of a PBT;
(b) 7 to 15 parts by weight of poly(pentabromobenzyl acrylate);
(c) 1 to 3 parts by weight of Sb₂O₃;
(d) 0.75 to 2.25 parts by weight of bisphenol A diphenyl phosphate;
(e) 1.7 to 2.3 parts by weight of talc;
(f) 0.05 to 0.15 parts by weight of sodium or potassium carbonate; and
(g) 25 to 35 parts by weight of glass fiber.

16. The polyalkylene terephthalate flame retardant composition of claim 14, that comprises:
(a) 40 to 50 parts by weight of a PBT having an intrinsic viscosity of 0.4 to 0.8cm³/g and 1 to 10 parts by weight of a PBT having an intrinsic viscosity of 0.8 to 1.4 cm³/g, wherein intrinsic viscosity is measured in a 60:40 mixture of phenol/tetrachloroethane mixture at 25°C according to ASTM D 2857-70 using a viscosimeter according to DIN 51562;
(b) 7 to 15 parts by weight of poly(pentabromobenzyl acrylate); and
(c) 1 to 3 parts by weight of Sb₂O₃;
(d) 0.75 to 2.25 parts by weight of BPADP;
(e) 1.7 to 2.3 parts by weight of talc;
(f) 0.05 to 0.15 parts by weight of sodium or potassium carbonate; and
(g) 25 to 35 parts by weight of glass fiber.

17. An article comprising the composition of any of claims 1-16.

18. An electrical connector comprising the composition of claim 15.

## Patentansprüche

1. Polyalkylenterephthalat-Flammschutzmittelzusammensetzung, die umfasst:
(a) 20 bis 70 Gewichtsteile eines Polyalkylenterephthalats oder einer Mischung aus Polyalkylenterephthalaten;
(b) 5 bis 15 Gewichtsteile Poly(pentabrombenzylacrylat);
(c) 0,1 bis 5 Gewichtsteile eines Antimonsynergisten; und
(d) 0,5 bis 3 Gewichtsteile Bisphenol-A-Diphenylphosphat;
(e) 0,5 bis 5 Gewichtsteile eines Nukleierungsmittels, das Talkum ist;
(f) 0,01 bis 2 Gewichtsteile Natrium- oder Kaliumcarbonat;
(g) 0 bis 60 Gewichtsteile eines Verstärkungsmitteis; und
(h) 0 bis 70 Gewichtsteile eines Polycarbonats;
wobei die Flammschutzmittelzusammensetzung eine UL-94-Klassifizierung von V-0 bei 0,4 Millimeter Dicke aufweist.

2. Polyalkylenterephthalat-Flammschutzmittelzusammensetzung nach Anspruch 1, wobei das Polyalkylenterephthalat ausgewählt ist aus der Gruppe bestehend aus Polyethylenterephthalat, Polybutylenterephthalat, einer Kombination von Polybutylenterephthalaten und einer Kombination von Polyethylenterephthalat und Polybutylenterephthalat.

3. Polyalkylenterephthalat-Flammschutzmittelzusammensetzung nach Anspruch 2, wobei das Polyalkylenterephthalat ein Polybutylenterephthalat oder eine Kombination von Polybutylenterephthalaten ist.

4. Polyalkylenterephthalat-Flammschutzmittelzusammensetzung nach Anspruch 3, wobei das Polyalkylenterephthalat ein Polybutylenterephthalat mit einer intrinsischen Viskosität von 0,4 bis 1,4 cm³/g, gemessen in einer 60:40-Phenolmischung/Tetrachlorethanmischung bei 25°C gemäß ASTM D 2857-70 unter Verwendung eines Viskosimeters nach DIN 51562, umfasst.

5. Polyalkylenterephthalat-Flammschutzmittelzusammensetzung nach Anspruch 3, wobei das Polyalkylenterephthalat eine Mischung aus einem ersten Polybutylenterephthalat mit einer intrinsischen Viskosität von 0,4 bis 0,8 cm³/g und einem zweiten Polybutylenterephthalat mit einer intrinsischen Viskosität von 0,8 bis 1,4 cm³/g umfasst, wobei die intrinsische Viskosität in einer 60:40 Phenolmischung/Tetrachlorethanmischung bei 25°C gemäß ASTM D 2857-70 unter Verwendung eines Viskosimeters nach DIN 51562 gemessen wird.

6. Polyalkylenterephthalat-Flammschutzmittelzusammensetzung nach Anspruch 5, ferner umfassend ein Antitropfmittel, das Polytetrafluorethylen umfasst.

7. Polyalkylenterephthalat-Flammschutzmittelzusammensetzung nach Anspruch 6, umfassend 0,25 bis 2 Gewichtsteile Polytetrafluorethylen, eingekapselt in Styrol-Acrylnitrilharz.

8. Polyalkylenterephthalat-Flammschutzmittelzusammensetzung nach Anspruch 7, ferner umfassend 1 bis 60 Gewichtsteile eines Verstärkungsmitteis.

9. Polyalkylenterephthalat-Flammschutzmittelzusammensetzung nach Anspruch 8, wobei das Verstärkungsmittel 15 bis 45 Gewichtsteile Glasfaser umfasst.

10. Polyalkylenterephthalat-Flammschutzmittelzusammensetzung nach Anspruch 9, wobei die Zusammensetzung 25 bis 35 Gewichtsteile einer Glasfaser umfasst.

11. Polyalkylenterephthalat-Flammschutzmittelzusammensetzung nach Anspruch 10, ferner umfassend 0,75 bis 2,25 Gewichtsteile BPADP.

12. Polyalkylenterephthalat-Flammschutzmittelzusammensetzung nach Anspruch 11, ferner umfassend 1,7 bis 2,3 Gewichtsteile Talkum.

13. Polyalkylenterephthalat-Flammschutzmittelzusammensetzung nach Anspruch 12, ferner umfassend 0,05 bis 0,15 Gewichtsteile eines teilchenförmigen Füllstoffs, der Natriumcarbonat ist.

14. Polyalkylenterephthalat-Flammschutzmittelzusammensetzung nach Anspruch 1, die umfasst:
(a) 45 bis 60 Gewichtsteile eines Polyalkylenterephthalats oder einer Mischung von Polyalkylenterephthalaten;
(b) 7 bis 15 Gewichtsteile Poly(pentabrombenzylacrylat);
(c) 1 bis 3 Gewichtsteile eines Antimonsynergisten; und
(d) 0,75 bis 2,25 Gewichtsteile Bisphenol-A-Diphenylphosphat;
(e) 0,5 bis 5 Gewichtsteile Talkum;
(f) 0,05 bis 0,15 Gewichtsteile Natrium- oder Kaliumcarbonat; und
(g) 15 bis 45 Gewichtsteile Glasfaser;
wobei die Flammschutzmittelzusammensetzung eine UL-94-Klassifizierung von V-0 bei 0,4 Millimeter Dicke aufweist.

15. Polyalkylenterephthalat-Flammschutzmittelzusammensetzung nach Anspruch 14, die umfasst:
(a) 45 bis 60 Gewichtsteile eines PBT;
(b) 7 bis 15 Gewichtsteile Poly(pentabrombenzylacrylat);
(c) 1 bis 3 Gewichtsteile Sb₂O₃;
(d) 0,75 bis 2,25 Gewichtsteile Bisphenol-A-Diphenylphosphat;
(e) 1,7 bis 2,3 Gewichtsteile Talkum;
(f) 0,05 bis 0,15 Gewichtsteile Natrium- oder Kaliumcarbonat; und
(g) 25 bis 35 Gewichtsteile Glasfaser.

16. Polyalkylenterephthalat-Flammschutzmittelzusammensetzung nach Anspruch 14, die umfasst:
(a) 40 bis 50 Gewichtsteile eines PBT mit einer intrinsischen Viskosität von 0,4 bis 0,8 cm³/g und 1 bis 10 Gewichtsteile eines PBT mit einer intrinsischen Viskosität von 0,8 bis 1,4 cm³/g, wobei die intrinsische Viskosität in einer 60:40 Phenolmischung/Tetrachlorethanmischung bei 25°C gemäß ASTM D 2857-70 unter Verwendung eines Viskosimeters nach DIN 51562 gemessen wird;
(b) 7 bis 15 Gewichtsteile Poly(pentabrombenzylacrylat); und
(c) 1 bis 3 Gewichtsteile Sb₂O₃;
(d) 0,75 bis 2,25 Gewichtsteile BPADP;
(e) 1,7 bis 2,3 Gewichtsteile Talkum;
(f) 0,05 bis 0,15 Gewichtsteile Natrium- oder Kaliumcarbonat; und
(g) 25 bis 35 Gewichtsteile Glasfaser.

17. Artikel, umfassend die Zusammensetzung nach einem der Ansprüche 1-16.

18. Elektrischer Verbinder, umfassend die Zusammensetzung nach Anspruch 15.

## Revendications

1. Composition ignifugeante à base de poly(téréphtalate d'alkylène) qui comprend :
(a) 20 à 70 parties en poids de poly(téréphtalate d'alkylène) ou d'un mélange de poly(téréphtalates d'alkylène) ;
(b) 5 à 15 parties en poids de poly(acrylate de pentabromobenzyle) ;
(c) 0,1 à 5 parties en poids d'agent synergique de type antimoine ; et
(d) 0,5 à 3 parties en poids de diphénylphosphate de bisphénol A ;
(e) 0,5 à 5 parties en poids d'un agent de nucléation qui est le talc ;
(f) 0,01 à 2 parties en poids de carbonate de sodium ou de potassium ;
(g) 0 à 60 parties en poids d'un agent de renforcement ; et
(h) 0 à 70 parties en poids de polycarbonate ;
où la composition ignifugeante a un indice UL-94 de V-0 à 0,4 millimètre d'épaisseur.

2. Composition ignifugeante à base de poly(téréphtalate d'alkylène) selon la revendication 1 dans laquelle le poly(téréphtalate d'alkylène) est choisi dans le groupe constitué par le poly(téréphtalate d'éthylène), le poly(téréphtalate de butylène), une combinaison de poly(téréphtalates de butylène) et une combinaison de poly(téréphtalate d'éthylène) et de poly(téréphtalate de butylène).

3. Composition ignifugeante à base de poly(téréphtalate d'alkylène) selon la revendication 2 dans laquelle le poly(téréphtalate d'alkylène) est un poly(téréphtalate de butylène) ou une combinaison de poly(téréphtalates de butylène).

4. Composition ignifugeante à base de poly(téréphtalate d'alkylène) selon la revendication 3, dans laquelle le poly(téréphtalate d'alkylène) comprend un poly(téréphtalate de butylène) ayant une viscosité intrinsèque de 0,4 à 1,4 cm³/g, mesurée dans un mélange 60:40 de phénol/tétrachloroéthane à 25 °C selon ASTM D 2857-70 à l'aide d'un viscosimètre selon DIN 51562.

5. Composition ignifugeante à base de poly(téréphtalate d'alkylène) selon la revendication 3, dans laquelle le poly(téréphtalate d'alkylène) comprend un mélange d'un premier poly(téréphtalate de butylène) ayant une viscosité intrinsèque de 0,4 à 0,8 cm³/g et d'un second poly(téréphtalate de butylène) ayant une viscosité intrinsèque de 0,8 à 1,4 cm³/g, où la viscosité intrinsèque est mesurée dans un mélange 60:40 de phénol/tétrachloroéthane à 25 °C selon ASTM D 2857-70 à l'aide d'un viscosimètre selon DIN 51562.

6. Composition ignifugeante à base de poly(téréphtalate d'alkylène) selon la revendication 5, comprenant en outre un agent antigouttes qui comprend un polytétrafluoroéthylène.

7. Composition ignifugeante à base de poly(téréphtalate d'alkylène) selon la revendication 6, comprenant de 0,25 à 2 parties en poids de polytétrafluoroéthylène encapsulé dans une résine styrène-acrylonitrile.

8. Composition ignifugeante à base de poly(téréphtalate d'alkylène) selon la revendication 7, comprenant en outre 1 à 60 parties en poids d'un agent de renforcement.

9. Composition ignifugeante à base de poly(téréphtalate d'alkylène) selon la revendication 8, dans laquelle l'agent de renforcement comprend 15 à 45 parties en poids de fibre de verre.

10. Composition ignifugeante à base de poly(téréphtalate d'alkylène) selon la revendication 9, dans laquelle la composition comprend 25 à 35 parties en poids de fibre de verre.

11. Composition ignifugeante à base de poly(téréphtalate d'alkylène) selon la revendication 10, comprenant en outre 0,75 à 2,25 parties en poids de BPADP.

12. Composition ignifugeante à base de poly(téréphtalate d'alkylène) selon la revendication 11, comprenant en outre 1,7 à 2,3 parties en poids de talc.

13. Composition ignifugeante à base de poly(téréphtalate d'alkylène) selon la revendication 12, comprenant en outre 0,05 à 0,15 parties en poids d'une charge particulaire qui est le carbonate de sodium.

14. Composition ignifugeante à base de poly(téréphtalate d'alkylène) selon la revendication 1, qui comprend :
(a) 45 à 60 parties en poids de poly(téréphtalate d'alkylène) ou d'un mélange de poly(téréphtalates d'alkylène) ;
(b) 7 à 15 parties en poids de poly(acrylate de pentabromobenzyle) ;
(c) 1 à 3 parties en poids d'agent synergique de type antimoine ;
(d) 0,75 à 2,25 parties en poids de diphénylphosphate de bisphénol A ;
(e) 0,5 à 5 parties en poids de talc ;
(f) 0,05 à 0,15 parties en poids de carbonate de sodium ou de potassium ; et
(g) 15 à 45 parties en poids de fibre de verre ;
où la composition ignifugeante a un indice UL-94 de V-0 à 0,4 millimètre d'épaisseur.

15. Composition ignifugeante à base de poly(téréphtalate d'alkylène) selon la revendication 14, qui comprend :
(a) 45 à 60 parties en poids de PBT ;
(b) 7 à 15 parties en poids de poly(acrylate de pentabromobenzyle) ;
(c) 1 à 3 parties en poids de Sb₂O₃ ;
(d) 0,75 à 2,25 parties en poids de diphénylphosphate de bisphénol A ;
(e) 1,7 à 2,3 parties en poids de talc ;
(f) 0,05 à 0,15 parties en poids de carbonate de sodium ou de potassium ; et
(g) 25 à 35 parties en poids de fibre de verre.

16. Composition ignifugeante à base de poly(téréphtalate d'alkylène) selon la revendication 14, qui comprend :
(a) 40 à 50 parties en poids d'un PBT ayant une viscosité intrinsèque de 0,4 à 0,8 cm³/g et 1 à 10 parties en poids d'un PBT ayant une viscosité intrinsèque de 0,8 à 1,4 cm³/g, où la viscosité intrinsèque est mesurée dans un mélange 60:40 de phénol/tétrachloroéthane à 25 °C selon ASTM D 2857-70 à l'aide d'un viscosimètre selon DIN 51562 ;
(b) 7 à 15 parties en poids de poly(acrylate de pentabromobenzyle) ;
(c) 1 à 3 parties en poids de Sb₂O₃ ;
(d) 0,75 à 2,25 parties en poids de BPADP ;
(e) 1,7 à 2,3 parties en poids de talc ;
(f) 0,05 à 0,15 parties en poids de carbonate de sodium ou de potassium ; et
(g) 25 à 35 parties en poids de fibre de verre.

17. Article comprenant la composition selon l'une quelconque des revendications 1 à 16.

18. Connecteur électrique comprenant la composition selon la revendication 15.
